# EUROPÄISCHE PATENTANMELDUNG

(11) **EP 2 763 114 A1**
(43) Veröffentlichungstag der Anmeldung: **06.08.2014**
(21) Anmeldenummer: 14000094.4
(22) Anmeldetag: 11.01.2014
(51) Int. Cl.: G08B 13/196, G08B 29/04, H04N 7/18

(54) **Schutzsystem eines Elektroinstallationsgerätes mit Kamera**

(30) Priorität: 04.02.2013 DE 102013001841
(71) Anmelder: ABB AG, 68309 Mannheim (DE)
(72) Erfinder: Schallenberg, Wolfgang, 40599 Düsseldorf (DE); Wieske, Stefan, 58285 Gevelsberg (DE); Lehnert, Christian, 58239 Schwerte (DE); Fröhling, Marcel, 58579 Schalksmühle (DE); Krummel, Holger, 58515 Lüdenscheid (DE)

(57) **Zusammenfassung**

Es wird ein Schutzsystem eines Elektroinstallationsgerätes (1) mit Kamera (10) vorgeschlagen,
• wobei eine Steuerlogik / Auswertung / Verarbeitung (5) und eine Bildauswertung / Speichereinheit (14) vorgesehen sind,
• wobei nach Inbetriebnahme und nach erfolgter Einstellung der Kamera (10) auf einen zu überwachenden Bereich mindestens ein Referenz-Kamerabild (29) aufgenommen und der Bildauswertung / Speichereinheit (14) zugeführt ist,
• wobei die Bildauswertung / Speichereinheit (14) aus diesem Bildmaterial markante, feststehende Bildanteile extrahiert, welche als Referenzinformationen (A, B) des Referenz-Kamerabildes (29) abzuspeichern sind,
• wobei während des Normalbetriebes in festgelegten zeitlichen Abständen Kamerabilder (30) erzeugt und der Bildauswertung / Speichereinheit (14) zuführbar sind,
• wobei die Bildauswertung / Speichereinheit (14) die gelieferten Bildinformationen dieser Kamerabilder (30) mit den Referenzinformationen des Referenz-Kamerabildes (29) korreliert,
• wobei bei signifikanten Abweichungen zwischen einem Kamerabild (30) und dem Referenz-Kamerabild (29) ein Alarmsignal mit Hilfe der Steuerlogik / Auswertung / Verarbeitung (5) erzeugbar ist, durch welches eine Bewegung / Lageänderung des Elektroinstallationsgerätes (1) inklusive Kamera (10) selbst indiziert ist.

## Beschreibung

Die Erfindung betrifft ein Schutzsystem eines Elektroinstallationsgeräts mit Kamera. Ein bevorzugtes Anwendungsgebiet ist bei Installationsgeräten der Gebäudesystemtechnik gegeben.

Auf dem Gebiet der Elektroinstallationsgeräte sind Präsenzmelder und Bewegungsmelder mit Kamera allgemein bekannt, welche einen bestimmten Bereich überwachen und dabei Bewegungen, insbesondere Wärmebewegungen, detektieren sowie entsprechende Schalthandlungen ausführen. Ferner sind Elektroinstallationsgeräte der Gebäudesystemtechnik mit Kamera, beispielsweise Anzeigepanels mit einem Touchscreen allgemein bekannt.

Vielfach dienen derartige Bewegungsmelder-Systeme mit Kamera zur Überwachung definierter Räume und Flächen, um derart kriminellen Handlungen vorzubeugen oder eine Aufklärung vorgenommener krimineller Handlungen zu erleichtern. Allerdings ist es möglich, vor der Durchführung einer kriminellen Handlung, beispielsweise eines Diebstahls, ein derartiges Bewegungsmelder/Kamera-System gezielt außer Funktion zu setzen, indem das Gerät oder der eingestellte Bereich, insbesondere der eingestellte Kamera-Bereich, gezielt verstellt oder abgedeckt wird.

Allgemein bekannte Präsenzmelder und Bewegungsmelder mit Kamera bieten keinen ausreichenden Schutz vor vorsätzlicher Verstellung oder "Außer Funktion"-Setzung durch Abdecken in der vorstehend erläuterter Weise, gerade wenn sich der Melder oder die Kamera im Außenbereich oder in einem öffentlichen Gebäude befindet und eine entsprechende Überwachungs- und Sicherheitsfunktion übernimmt.

In ähnlicher Weise sind beispielsweise in öffentlichen Gebäuden installierte hochwertige / hochpreisige, eine Kamera aufweisende Elektroinstallationsgeräte diebstahlgefährdet, indem eine Bedieneinheit / Funktionseinheit von der in einer Unterputz-Gerätedose installierten Basiseinheit / Unterputzeinheit unter Einwirkung von Gewalt abgezogen wird.

Die automatische Erkennung von Kamerabildmanipulationen unterliegt bezüglich der Detektionsgenauigkeit, Fehlinterpretationen und Fehlalarmierungen gewissen Unzulänglichkeiten, die beispielsweise in Daw-Tung Li, Chung-Han Wu, "Real-Time Active Tampering Detection of Surveillance Camera and Implementation on Digital Signal Processor", IEEE Computer Society Washington, DC USA 2012, ISBN: 978-0-7695-4712-1 beschrieben sind.

Der Erfindung liegt die Aufgabe zugrunde, ein optimiertes Elektroinstallationsgerät-Schutzsystem für ein Elektroinstallationsgerät mit Kamera anzugeben.

Diese Aufgabe wird erfindungsgemäß gelöst durch ein Schutzsystem eines Elektroinstallationsgerätes mit Kamera,
- wobei eine Steuerlogik / Auswertung / Verarbeitung und eine Bildauswertung / Speichereinheit vorgesehen sind,
- wobei nach Inbetriebnahme und nach erfolgter Einstellung der Kamera auf einen zu überwachenden Bereich mindestens ein Referenz-Kamerabild aufgenommen und der Bildauswertung / Speichereinheit zugeführt ist,
- wobei die Bildauswertung / Speichereinheit aus diesem Bildmaterial markante, feststehende Bildanteile extrahiert, welche als Referenzinformationen des Referenz-Kamerabildes abzuspeichern sind,
- wobei während des Normalbetriebes in festgelegten zeitlichen Abständen Kamerabilder erzeugt und der Bildauswertung / Speichereinheit zuführbar sind,
- wobei die Bildauswertung / Speichereinheit die gelieferten Bildinformationen dieser Kamerabilder mit den Referenzinformationen des ReferenzKamerabildes korreliert,
- wobei bei signifikanten Abweichungen zwischen einem Kamerabild und dem Referenz-Kamerabild ein Alarmsignal mit Hilfe der Steuerlogik / Auswertung / Verarbeitung erzeugbar ist, durch welches eine Bewegung / Lageänderung des Elektroinstallationsgerätes inklusive Kamera selbst indiziert ist.

Gemäß der vorliegenden Erfindung soll die automatische Erkennung von Kamerabi-Idmanipulationen bezüglich Detektionsgenauigkeit, Fehlinterpretationen und Fehlalarmierungen verbessert werden, indem beispielsweise die im Präsenz- bzw. Bewegungsmelder vorhandenen Sensoriken, wie passive Infrarotsensoren (PIR), Sensoren, die auf die Beleuchtungsstärke (LUX) und/oder die Temperatur reagieren, in den Auswertungsprozess mit einbezogen werden.

Als Bilddetektionsverfahren zur Überwachung von Räumen und Flächen werden beispielsweise folgende aus dem Stand der Technik bekannte Algorithmen zur Bildauswertung eingesetzt:
- Kantendetektionsverfahren, mittels Sobel-Operator, Scharr-Operator, Laplace-Filter und Laplace-Operator, Prewitt-Operator, Roberts-Operator, Kirsch-Operator, Canny-Algorithmus, Marr-Hildreth-Operator, Kontrastverstärker usw. Eckendetektionverfahren
- Isolierte Punkte,
- Histogramme
- Korrelationsverfahren

Auch kann eine Kombination der vorab genannten Verfahren zur Bildauswertung verwendet werden, um Referenzpunkte anhand des Referenzkamerabildes zu identifizieren.

Wird die Kamera unzulässiger Weise abgedeckt oder besprüht, führen die bisher bekannten Bildauswertealgorithmen zu einer Fehlinterpretation, wenn sich vor dem Kamerabild ein Gegenstand bzw. eine Person befindet, die wesentliche Teile des Bildes bedecken, die ebenfalls die für die Auswertung notwendigen Referenzpunkte beinhalten. Durch die Hinzunahme eines LUX-Sensors kann eine solche Fehlinterpretation korrigiert werden.

Durch die Einbeziehung des PIR Signals eines vorgesehenen passiven Infrarotsensors können das Verstellen oder Verschieben der Kamera erkannt und in der Auswertung/Verarbeitung berücksichtigt werden.

Wird die Kamera mit einem Bewegungsmelder mit PIR-Sensorik ausgestattet, die nach vorn gerichtet ist, erfolgt die Alarmierung, wenn die Bildauswertung eine Veränderung der Referenzpunkte erkennt und der PIR Sensor keine Bewegung zuvor erkannt hat. Damit wird der Fall abgedeckt, dass eine Kameramanipulation außerhalb des Detektionsbereichs des Bewegungsmelders zuverlässiger erkannt wird.

Wird die Kamera mit einem sogenannten Komfort-Bewegungsmelder mit PIR-Sensorik ausgestattet, die nach vorn und zusätzlich nach unten gerichtet ist, erfolgt die Alarmierung in jedem Fall, wenn die Bildauswertung eine Veränderung der Referenzpunkte erkannt und zuvor der PIR Sensor, vorzugsweise sein nach unten gerichteter Teil eine Bewegung erkannt hat. Damit wird der Fall abgedeckt, dass eine Kameramanipulation im Bereich des nach unten gerichteten Bewegungsmelders zuverlässiger erkannt wird.

Die mit der Erfindung erzielbaren Vorteile liegen insbesondere darin, dass mit dem Schutzsystem eine unzulässige Manipulation am Elektroinstallationsgerät mit der Kamera ermittelt und gemeldet werden kann, wodurch einem Diebstahl vorgebeugt werden kann, da jeder Geräteentwendung oder jeder Manipulation eine Bewegungsänderung des Gerätes vorausgeht.

Dabei kann das Elektroinstallationsgerät
- eine kabellose und/oder kabelgebundene Busschnittstelle für den Anschluss an ein Bussystem der Gebäudesystemtechnik aufweisen, um derart eine Alarmierung zu realisieren und/oder
- einen Schaltausgang für den Anschluss an eine Alarmeinrichtung aufweisen, welche im Elektroinstallationsgerät selbst integriert oder extern angeordnet ist.
Für die Energieversorgung der Baukomponenten kann das Elektroinstallationsgerät zumindest ein Netzteil für den Anschluss an eine externe Spannungsversorgung aufweisen.

In weiterer Ausgestaltung kann das Elektroinstallationsgerät
- Bedienelemente und/oder
- einen Bewegungssensor aufweisen.

Mit Hilfe des Bewegungssensors kann beispielsweise eine Ansteuerung der Kamera erfolgen, d. h. Einschalten der Kamera bei detektierter Bewegung und Ausschalten der Kamera, falls während eines längeren Zeitraums keinerlei Bewegung detektiert worden ist.

Das Elektroinstallationsgerät ist vorzugsweise aus einer Basiseinheit und einer Funktionseinheit mit der Kamera zusammengesetzt, wobei diese beiden Einheiten über eine Spannungs-/Daten-Schnittstelle und ein Gelenk miteinander verbunden sein können.

Die Erfindung wird nachstehend an Hand der in der Zeichnung dargestellten Ausführungsbeispiele näher erläutert. Es zeigen:
Fig. 1 eine Grundausführung des Schutzsystems eines Elektroinstallationsgeräts mit Kamera,
Fig. 2 ein zur Überwachung eines bestimmten Bereiches dienendes ReferenzKamerabild,
Fig. 3 ein nach einer erfolgten Manipulation erzeugtes Kamerabild.

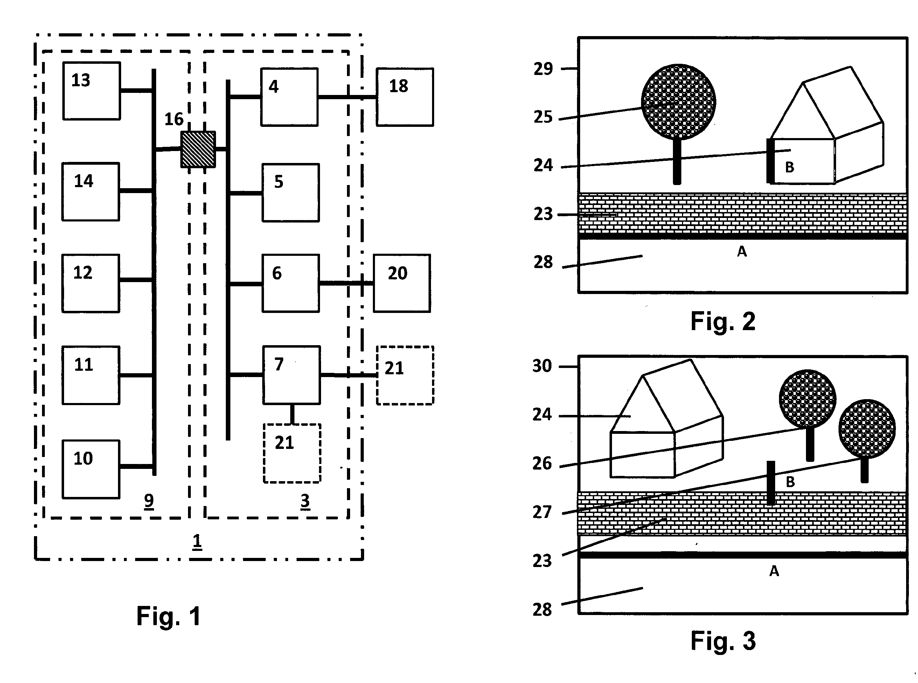

In Fig. 1 ist eine Grundausführung des Schutzsystems eines Elektroinstallationsgeräts mit Kamera dargestellt. Das Elektroinstallationsgerät 1 ist zusammengesetzt aus
- einer Basiseinheit 3, welche zur Wandbefestigung dient und
- einer Funktionseinheit 9 mit Kamera 10,
wobei die Basiseinheit 3 und die Funktionseinheit 9 elektrisch über eine Spannungs-/Daten-Schnittstelle 16 und mechanisch über ein Gelenk miteinander verbunden sind. Mittels des Gelenks ist eine genaue Ausrichtung der Funktionseinheit 9 mit der Kamera 10 auf einen bestimmten zu überwachenden Bereich (Raum, Fläche) möglich.

Die Basiseinheit 3 kann die folgenden Baukomponenten aufweisen:
- ein Netzteil 4 für die Verbindung mit einer externen Spannungsversorgung 18, z. B. einem 230V-Wechselspannungsnetz,
- eine Steuerlogik / Auswertung / Verarbeitung 5,
- eine kabellose und/oder kabelgebundene Busschnittstelle 6 zur Gebäudesystemtechnik, d. h. für den Anschluss an ein Bussystem 20 der Gebäudesystemtechnik, wobei bei kabelloser Busschnittstelle die Kommunikation vorzugsweise über Funk erfolgt,
- einen Schaltausgang 7 für den Anschluss an eine Alarmeinrichtung 21, welche sowohl intern als auch extern bezüglich des Elektroinstallationsgerätes 1 angeordnet sein kann.

Die vorstehend angeführten Baukomponenten sind elektrisch / datentechnisch in geeigneter Weise miteinander verbunden.

Die Funktionseinheit 9 kann außer der Kamera 10 die folgenden Baukomponenten aufweisen:
- Bedienelemente 11, beispielsweise in Form von Tastern oder in Form eines Touchscreens, welcher gleichzeitig die Funktion einer Anzeigeeinheit erfüllt,
- einen Bewegungssensor 12,
- ein Netzteil 13,
- eine Bildauswertung / Speichereinheit 14.

Die vorstehend angeführten Baukomponenten sind elektrisch / datentechnisch in geeigneter Weise miteinander verbunden.

Abweichend von der vorstehend beschriebenen Grundausführung sind alternative Ausführungsformen realisierbar, welche nicht alle vorstehend angeführten Baukomponenten aufweisen. Nachstehend einige Beispiele für derartige alternative Ausführungsformen:
- bei einer ersten alternativen Ausführungsform des Elektroinstallationsgerätes 1 entfällt das Netzteil 13;
- bei einer zweiten alternativen Ausführungsform des Elektroinstallationsgerätes 1 entfällt der Schaltausgang 7;
- bei einer dritten alternativen Ausführungsform des Elektroinstallationsgerätes 1 entfällt der Bewegungssensor 12.

Selbstverständlich sind weitere alternative Ausführungsformen des Elektroinstallationsgerätes 1 realisierbar, welche sich aus einer Kombination der vorstehend angeführten alternativen Ausführungsformen ergeben.

Des Weiteren sind weitere Ausführungsformen des Elektroinstallationsgerätes 1 realisierbar, bei welchen keine strikte Unterteilung in eine Basiseinheit 3 und eine Funktionseinheit 9 vorgesehen ist. Wichtig ist in jedem Fall die Einstellmöglichkeit der Kamera 10 über ein Gelenk.

Einer Abdeckung oder Verstellung der Kamera 10 und damit "Außer Funktionssetzung" eines betrachteten Elektroinstallationsgerätes geht in der Regel mit einer detektierbaren Bewegung einher - abgesehen von einer durch Überspannung verursachten "Außer Funktionssetzung". Ziel des vorgeschlagenen Schutzsystems ist es deshalb, diese Bewegung im Vorfeld der eigentlichen Verstellung und/oder "Außer Funktionssetzung" frühzeitig zu erkennen und zu melden, um weiteren Schaden abzuwenden. Eine unzulässige Abdeckung oder Verstellung der Kamera 10 wird durch eine Bildabweichung detektiert.

Für die Erkennung einer Verstellung oder Abdeckung der Kamera 10 wird nach erfolgter Installation der Kamera 10 und vorgenommener Einstellung des zu überwachenden Bereiches nach Inbetriebnahme zunächst mindestens ein (vorzugsweise mehrere) statisches Kamerabild aufgenommen und der Bildauswertung / Speichereinheit 14 zugeführt. Aus dem so gewonnenen Kamerabild (Bildmaterial) extrahiert die Bildauswertung / Speichereinheit 14 markante, feststehende Bildanteile - beispielsweise durch Konturendetektion - welche als Referenzinformationen herangezogen und abgespeichert werden. Nachfolgend ein Beispiel für ein derartiges Referenz-Kamerabild 29 mit Extrahierung von Referenzinformationen:

In Fig. 2 ist ein zur Überwachung eines bestimmten Bereiches dienendes Referenz-Kamerabild dargestellt. Das Referenz-Kamerabild 29 zeigt eine Mauer 23, vor der sich ein Straßenabschnitt 28 erstreckt und hinter der sich im rechten Bildbereich ein Haus 24 befindet. Des Weiteren ist ein links neben dem Haus 24 angeordneter Baum 25 zu erkennen. Durch Konturendetektion werden der Übergang von der Mauer 23 zum Straßenabschnitt 28 als Kontur A und die linke Hauskante des Hauses 24 als Kontur B extrahiert und als Referenzinformationen A, B herangezogen. Während des Normalbetriebes des Elektroinstallationsgerätes1 werden in festgelegten zeitlichen Abständen Kamerabilder aufgenommen und der Bildauswertung / Speichereinheit zugeführt.

In Fig. 3 ist ein während des Normalbetriebes und nach einer erfolgten Manipulation erzeugtes Kamerabild dargestellt. Die Kamera 10 ist gewaltsam sowohl nach rechts als auch nach oben geschwenkt worden, wodurch das Kamerabild 30 nach Verstellung der Kamera den Baum 25 nicht mehr erfasst und das Haus 24 in den linken Bildbereich verschoben worden ist. Rechts neben dem Haus 24 sind zwei Bäume 26, 27 zu erkennen, welche nicht Bestandteile des Referenz-Kamerabildes 29 zur Extrahierung von Referenzinformationen gemäß Fig. 2 sind. Die Mauer 23 ist in Richtung zum oberen Bildbereich hin verschoben worden, während sich gleichzeitig der Straßenabschnitt 28 verändert, insbesondere auch vergrößert hat. Die in das Kamerabild 30 eingeblendeten Konturen / Referenzinformationen A, B finden kein Korrelat im Referenz-Kamerabild 29.

Die Bildauswertung / Speichereinheit 14 setzt die gewonnenen Bildinformationen gemäß Kamerabild 30 nach Fig. 3 in Beziehung - beispielsweise durch Bildsubtraktion - zu den Referenzinformationen gemäß Referenz-Kamerabild 29 nach Fig. 2 und durch diese Korrelation werden Abweichungen erkannt. Sind die Abweichungen signifikant, d. h. werden vorgegebene Grenzwerte überschritten, so deutet dies auf eine Abdeckung oder gewaltsame Verstellung der Kamera hin und folglich wird ein entsprechendes Signal von der Bildauswertung / Speichereinheit 14 an die Steuerlogik / Auswertung / Verarbeitung 5 abgegeben. Diese Rückmeldung einer ungewünschten / unerwarteten Verstellung oder Abdeckung der Kamera 10 kann im Falle eines vorhandenen Busanschlusses oder Funksystems - siehe Busschnittstelle 6 - über das Bus-/Funksystem dem Gebäudesystem mitgeteilt werden und somit einen präventiven Alarm, beispielsweise ein visuelles und/oder akustisches Signal bis hin zur Verriegelung von Wegen und Türen auslösen. Alternativ oder zusätzlich wird der Schaltausgang 7 angesteuert, was zur Aktivierung der Alarmeinrichtung 21 führt.

Während der Inbetriebnahme wird das vorgeschlagene Schutzsystem deaktiviert, d. h. erst nach abgeschlossener Inbetriebnahme wird die Schutzfunktion aktiviert.

Für alle Ausführungsformen gilt, dass die Übertragung der Alarmierung entweder über den Schaltausgang 7 und/oder über die Busschnittstelle 6 erfolgt.

### Bezugszeichenliste

- 1: Elektroinstallationsgerät
- 2: -
- 3: Basiseinheit
- 4: Netzteil
- 5: Steuerlogik / Auswertung / Verarbeitung
- 6: Kabellose und/oder kabelgebundene Busschnittstelle zur Gebäudesystemtechnik
- 7: Schaltausgang
- 8: -
- 9: Funktionseinheit
- 10: Kamera
- 11: Bedienelemente
- 12: Bewegungssensor
- 13: Netzteil
- 14: Bildauswertung / Speichereinheit
- 15: -
- 16: Spannungs-/Daten-Schnittstelle
- 17: -
- 18: externe Spannungsversorgung
- 19: -
- 20: Bussystem
- 21: Alarmeinrichtung
- 22: -
- 23: Mauer
- 24: Haus
- 25: Baum
- 26: Baum
- 27: Baum
- 28: Straßenabschnitt
- 29: Referenz-Kamerabild zur Extrahierung von Referenzinformationen
- 30: Kamerabild nach Verstellung der Kamera

## Patentansprüche

1. Schutzsystem eines Elektroinstallationsgerätes (1) mit Kamera (10),
• wobei eine Steuerlogik / Auswertung / Verarbeitung (5) und eine Bildauswertung / Speichereinheit (14) vorgesehen sind,
• wobei nach Inbetriebnahme und nach erfolgter Einstellung der Kamera (10) auf einen zu überwachenden Bereich mindestens ein Referenz-Kamerabild (29) aufgenommen und der Bildauswertung / Speichereinheit (14) zugeführt ist,
• wobei die Bildauswertung / Speichereinheit (14) aus diesem Bildmaterial markante, feststehende Bildanteile extrahiert, welche als Referenzinformationen (A, B) des Referenz-Kamerabildes (29) abzuspeichern sind,
• wobei während des Normalbetriebes in festgelegten zeitlichen Abständen Kamerabilder (30) erzeugt und der Bildauswertung / Speichereinheit (14) zuführbar sind,
• wobei die Bildauswertung / Speichereinheit (14) die gelieferten Bildinformationen dieser Kamerabilder (30) mit den Referenzinformationen des ReferenzKamerabildes (29) korreliert,
• wobei bei signifikanten Abweichungen zwischen einem Kamerabild (30) und dem Referenz-Kamerabild (29) ein Alarmsignal mit Hilfe der Steuerlogik / Auswertung / Verarbeitung (5) erzeugbar ist, durch welches eine Bewegung / Lageänderung des Elektroinstallationsgerätes (1) inklusive Kamera (10) selbst indiziert ist.

2. Schutzsystem nach Anspruch 1, **dadurch gekennzeichnet, dass** das Elektroinstallationsgerät (1) eine kabellose und/oder kabelgebundene Busschnittstelle (6) für den Anschluss an ein Bussystem (20) der Gebäudesystemtechnik aufweist.

3. Schutzsystem nach Anspruch 1 oder 2, **dadurch gekennzeichnet, dass** das Elektroinstallationsgerät (1) einen Schaltausgang (7) für den Anschluss an eine Alarmeinrichtung (21) aufweist.

4. Schutzsystem nach einem der vorstehenden Ansprüche, **dadurch gekennzeichnet, dass** das Elektroinstallationsgerät (1) zumindest ein Netzteil (4, 13) für den Anschluss an eine externe Spannungsversorgung (18) aufweist.

5. Schutzsystem nach einem der vorstehenden Ansprüche, **dadurch gekennzeichnet, dass** das Elektroinstallationsgerät (1) Bedienelemente (11) aufweist.

6. Schutzsystem nach einem der vorstehenden Ansprüche, **dadurch gekennzeichnet, dass** das Elektroinstallationsgerät (1) einen Bewegungssensor (12) aufweist.

7. Schutzsystem nach einem der vorstehenden Ansprüche, **dadurch gekennzeichnet, dass** das Elektroinstallationsgerät (1) aus einer Basiseinheit (3) und einer Funktionseinheit (9) mit der Kamera (10) zusammengesetzt ist, wobei beide Einheiten über eine Spannungs-/Daten-Schnittstelle (16) und ein Gelenk miteinander verbindbar sind.
